# EUROPEAN PATENT SPECIFICATION

(11) **EP 0 725 868 B1**
(45) Date of publication and mention of the grant of the patent: **17.06.1998**
(21) Application number: 93919796.8
(22) Date of filing: 09.09.1993
(51) Int. Cl.: E04B 2/92, E04C 2/26

(54) **STRUCTURAL UNIT**
BAUEINHEIT
UNITE STRUCTURALE

(30) Priority: 09.09.1992 SE 9202586
(43) Date of publication of application: 14.08.1996
(73) Proprietor: SWESIB RITKONTOR AB, S-431 02 Mölndal (SE)
(72) Inventor: NULAND, Kjell, S-421 53 V Frölunda (SE); SVENNING, Johnny, S-430 41 Kullavik (SE)
(74) Representative: Franzén, Lars Hjalmar
(86) International application number: SE9300734
(87) International publication number: WO9405871

(56) References cited:
- CH-A- 592 792
- DE-A- 2 511 293
- DE-A- 2 512 597

## Description

### TECHNICAL FIELD

The subject invention concerns a lightweight, dimensionally stable structural unit intended primarily as a facing slab for apartment houses and other buildings.

### BACKGROUND OF THE INVENTION

Structural units intended as facing on houses and other premises must not contain combustible materials. A material that is frequently used is e.g. concrete.

External walls made from prefabricated concrete building elements usually must have an external insulation layer and a cavity wall to protect the insulation, in order to meet the heat-insulation standard. A wall of this kind is comparatively expensive to manufacture and time-consuming to produce. As an alternative to the cavity wall construction sheet-metal or slabs of a weather-resistant material may be used.

Various modifications of sandwich constructions also exist, comprising insulation, an external facing and an inner cover, which constructions meet the requirements for low weight and dimension stability.

Hitherto, sandwich constructions have not, however, been competitive on account of the considerable costs involved. In addition, they have primarily been intended for buildings not exceding a height of five stories.

Other factors to consider in the construction and arrangement of building elements or structural units intended as facing for houses and other buildings are, in addition to fire-resistance, durability, weather-resistance, heat insulation properties, weight and manufacturing costs but also the coefficient of expansion, vapour permeability and the ability to dampen the transmission of sound are important factors in this connection.

### TECHNICAL PROBLEM

The purpose of the subject invention is to provide a building element or structural unit of the Kind known from CH-A-592 792, intented primarily as facing on apartment houses or office buildings or the like and exhibiting high values in respect of all the factors outlined in the aforegoing, in addition to which, on account of its low weight and high dimension stability, the structural unit may be used in tall buildings and whenever the wall has to meet severe demands with respect to heat, cold and vapour pressure.

### THE SOLUTION

This purpose is achieved in a structural unit in accordance with the features of claim 1.

Further preferred embodiments of the invention are given in dependent Claims 2 and 3.

### DESCRIPTION OF THE DRAWING FIGURES

The invention will be described in closer detail in the following with reference to the accompanying drawings, wherein
Fig. 1 is a plan view of a building element or structural unit in accordance with the invention in the form of a facing slab,
Fig. 2 is a sectional view along line II-II of Fig. 1,
Fig. 3 is a lateral sectional view through the arrangement for fastening the structural unit in accordance with the invention to a horizontal concrete beam,
Fig. 4 is a view from above of a corner of a facade including the fastening arrangement of a structural unit in accordance with the invention to a vertical concrete beam,
Fig. 5 illustrates the fastening arrangement of the structural unit in accordance to the invention to a cellular concrete floor, and
Fig. 6 is a sectional view of a detail showing the structure of the structural unit.

### DESCRIPTION OF an EMBODIMENT OF THE INVENTION

The building element or structural unit according to the invention and illustrated in the drawings is constructed as a facing wall unit and is provided with a core 10 of foamed quartz glass, known as foam glass. This glass is produced by heating melted quartz glass until it becomes liquid, whereupon the liquid glass is allowed to expand, by addition of a gas-generating substance, until the glass forms a fine-cell foam. When the glass has solidified, it forms a rigid block that may be sewn into slabs of suitable thickness.

The length and width of the slabs are adjusted to the intended measures of the finished structural unit. Apertures are made in the slab to accommodate various fittings to be used for the mounting of doors and windows in the facing unit, and to lift and mount the unit to the building framework. The fittings, including threaded sleeves and flat bars of e.g. stainless or galvanized steel, are positioned inside the foam glass core.

An adhesive layer 13 is then applied on top of the foam glass core 10, and the latter, together with the layer 13, is cast into an enclosing layer 11 of fibre-reinforced concrete which adheres to layer 13.

The layer 11 of fibre-reinforced concrete could have a thickness of approximately 15 - 20 mm whereas the foam glass core could have a thickness of 120-200 mm.

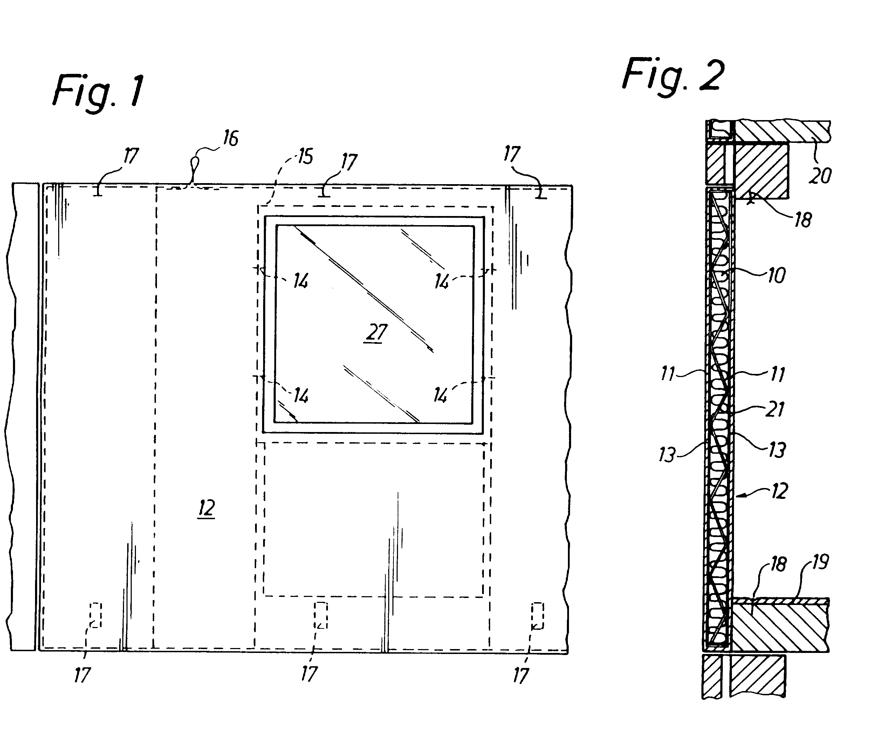

Fig. 1 illustrates a finished facing unit 12 including a window 27 which by means of a door-frame screw fastener 14 is mounted in a steel frame 15 cast into the unit. A lifting loop 16 is cast into the unit to be used in the handling thereof during transport to the building site and to lift the unit in position on a building framework. Fittings 17 positioned at the upper and lower edges of the unit are used to secure the unit to the building framework.

Fig. 2 illustrates the unit 12 in a sectional view. As appears therefrom, horizontally projection portions of the fittings 17 are secured by means of screw fasteners 18 to the floor structure 19, 20 of the building frame. A reinforcement construction 21 of stainless steel interconnects the two layers 11.

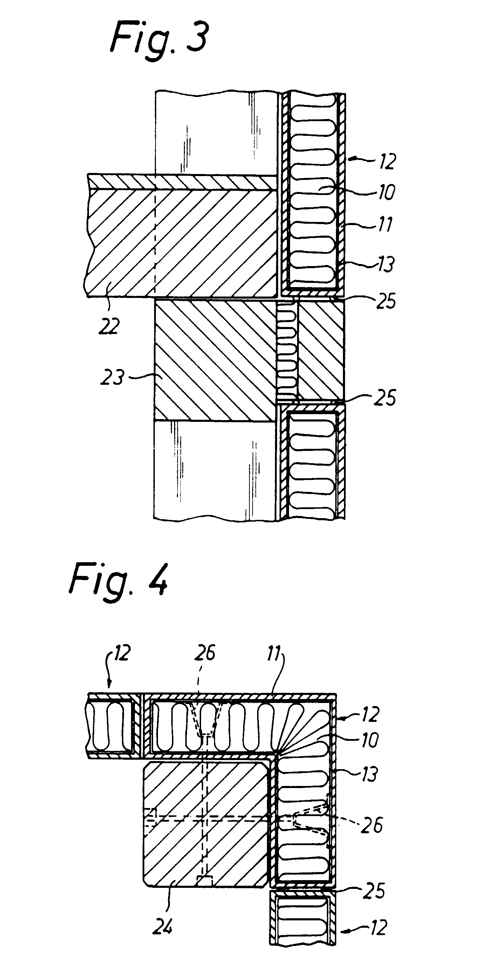

Figs. 3 - 5 illustrate in closer detail the manner in which units 12 are mounted in a building framework comprising a prefabricated cast cellular concrete floor 22, a horizontal concrete beam 23 and a vertical concrete beam 24. The joints between two units 12 and between the unit and the framework are insulated by means of mineral wool caulking 25 (known as soft sealing).

In the corner portion of the building illustrated in Fig. 4, a corner unit 12 is secured by means of threaded sleeves and bolts 26 cast into the unit and extending through the vertical concrete beam 24.

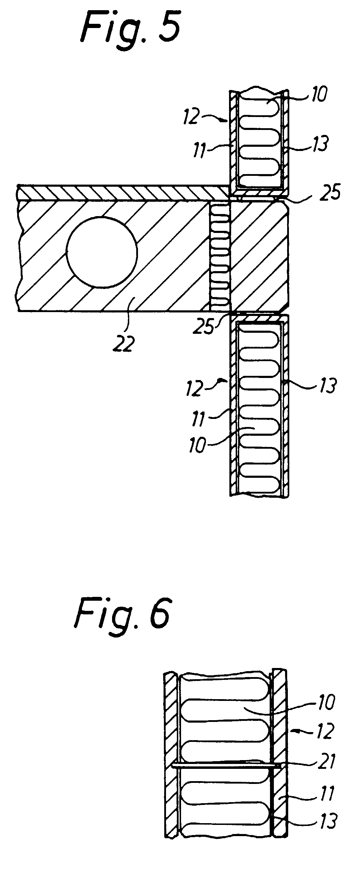

Fig. 6 is a detailed sectional view showing the structure of the facing wall unit 12. The centre is formed by the foam glass core 10, surrounded on either side by the adhesive layer 13 and externally thereof and adhering to layer 13, by the fibre-reinforced concrete layer 11 enclosing the foam glass core 10 and forming the outermost layer.

Preferably, the adhesive layer 13 consists of an asphalt adhesive or a silicate glue and glass-fibre reinforced and preferably wet-strength cardboard or a glass-fibre cloth, such as a textile cloth of polymer glass fibres.

The foam glass core described above preferably consists of pure quartz glass without a binding agent and preferably having a completely closed-cell structure. The dimension stability is unchangeable. The dead weight is about 1.2 kN/m³ and the density about 105 and 165 kg/m³. The material is non-combustible and can withstand temperatures between -260°C and +430°C. The vapour permeability is practically none and the sound transmission value is 28dB for thicknesses of 100 mm and normal frequency ranges.

The structural unit as a whole has a compressive strength in the order of 400-1600 kN/cm² and a flexural strength of between 300 and 1600 kN/cm².

In summary, the structural unit in accordance with the invention exhibits the following properties
- thermal insulating
- dimensionally stable
- diffusion proof
- impermeable to radon radiation
- non-combustible
- resistance to attacks from vermine and to mould-formation
- manufactured without hazards to the environment
- recycable

The invention is not limited to the embodiments described in the aforegoing but several modifications are possible within the scope of the appended claims.

## Claims

1. A lightweight, dimensionally stable structural unit, primarily for use as facing on houses and other buildings, said unit having a core (10) of foam glass, a layer (11) fibre-reinforced concrete enclosing said core, and an adhesive layer (13) interposed between the foam glass core (10) and the layer (11) of fibre-reinforced concrete to adhere to and to be laminated with said core and said concrete layer, **characterized** in that said adhesive layer (13) consists of an asphalt adhesive or of a silica glue.

2. A structural unit as claimed in claim 1, **characterized** in that the asphalt adhesive layer or the silica glue are covered with fibreglass-reinforced coardboard, with a fibreglass mat or the like which adheres to the layer of fibre-reinforced concrete.

3. A structural unit as claimed in claims 1 and 2, **characterized** in that the layers (11) cf fibre-reinforced concrete on either side of the foam glass core (10) are anchored to one another by means of forked clamps, a reinforcement construction (21) or the like.

## Patentansprüche

1. Leichte, formstabile Baueinheit, in der Hauptsache zur Verwendung als Verkleidung an Häusern und anderen Gebäuden, wobei die Einheit einen Kern (10) aus Schaumglas, eine den Kern umschließende Schicht (11) aus faserverstärktem Beton und eine Klebschicht (13) aufweist, die zwischen dem Schaumglaskern (10) und der Schicht (11) aus faserverstärktem Beton angeordnet ist, so daß sie an dem Kern und der Betonschicht haftet und damit laminiert wird, dadurch gekennzeichnet, daß die Klebschicht (13) aus einem Asphaltklebstoff oder aus einem Silicaklebstoff besteht.

2. Baueinheit nach Anspruch 1, dadurch gekennzeichent, daß die Asphaltklebstoffschicht oder der Silicaklebstoff mit glasfaserverstärkter Pappe, mit einer Glasfasermatte oder dergleichen bedeckt ist, die an der Schicht aus faserverstärktem Beton haftet.

3. Baueinheit nach Anspruch 1 und 2, dadurch gekennzeichnet, daß die Schichten (11) aus faserverstärktem Beton auf beiden Seiten des Schaumglaskerns (10) mittels Gabelklemmen, einer Verstärkungskonstruktion (21) oder dergleichen miteinander verankert sind.

## Revendications

1. Unité de structure légère résistant à la déformation, à utiliser principalement à titre de parement sur des maisons et sur d'autres bâtiments, ladite unité comportant une partie centrale (10) en verre-mousse, une couche (11) de béton renforcé par des fibres renfermant ladite partie centrale, et une couche adhésive (13) intercalée entre la partie centrale (10) en verre-mousse et la couche (11) de béton renforcé par des fibres, à des fins d'adhérence et de contrecollage à ladite partie centrale et à ladite couche de béton, caractérisée en ce que ladite couche adhésive (13) est constituée d'un adhésif bitumineux ou d'une colle siliceuse.

2. Unité de structure selon la revendication 1, caractérisée en ce que la couche d'adhésif bitumineux ou la colle siliceuse est recouverte de carton renforcé par des fibres de verre, muni d'un matelas de fibres de verre ou analogues qui adhère à la couche du béton renforcé par des fibres.

3. Unité de structure selon les revendications 1 et 2, caractérisée en ce que les couches (11) de béton renforcées par des fibres de part et d'autre de la partie centrale (10) en verre-mousse sont ancrées l'une à l'autre au moyen de crampons fourchus, d'une construction de renforcement (21) ou analogues.
